## Europäisches Patentamt

## European Patent Office

## Office européen des brevets

(11) Veröffentlichungsnummer: **0 199 931**
**B1**

(12) **EUROPÄISCHE PATENTSCHRIFT**

(45) Veröffentlichungstag der Patentschrift:
04.01.89

(51) Int. Cl.⁴: **E 04 F 10/08,** E 06 B 9/32

(21) Anmeldenummer: **86102959.3**

(22) Anmeldetag: **06.03.86**

(54) Sonnenschutzeinrichtung.

(30) Priorität: **30.04.85 DE 3515581**

(43) Veröffentlichungstag der Anmeldung:
**05.11.86 Patentblatt 86/45**

(45) Bekanntmachung des Hinweises auf die Patenterteilung:
**04.01.89 Patentblatt 89/1**

(84) Benannte Vertragsstaaten:
**AT CH DE FR GB IT LI**

(56) Entgegenhaltungen:
**WO-A-83/01122**
**DE-A-1 759 618**
**DE-A-2 732 592**
**DE-B-1 286 735**

(73) Patentinhaber: **Siemens Aktiengesellschaft Berlin und München, Wittelsbacherplatz 2, D-8000 München 2 (DE)**

(72) Erfinder: **Riehl, Horst, Am Stiegelein 8, D-8634 Rodach (DE)**
Erfinder: **Nebhuth, Thomas, Wichernstrasse 6, D-8621 Grub a.F. (DE)**
Erfinder: **Bartenbach, Christian, Lindenschmitstrasse 23, D-8000 München 70 (DE)**
Erfinder: **Klingler, Martin, Höhenstrasse 2 a, A-6020 Innsbruck (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 199 931 B1

LIBER, STOCKHOLM 1989

## Beschreibung

Die Erfindung betrifft eine Sonnenschutzeinrichtung gemäß Oberbegriff der Ansprüche 1 und 6.

Eine solche, aus der Internationalen Patentanmeldung WO 83/01 122 bekannte Sonnenschutzeinrichtung hat einen verhältnismäßig kleinen Sperrbereich: Verglichen mit den bis dahin bekannten retroreflektierenden Sonnenschutzeinrichtungen läßt sie viel Zenitlicht in den dahinterliegenden Raum eintreten und braucht trotzdem im Verlauf des Tages und der Jahreszeiten nur wenig nachgestellt zu werden.

Der Erfindung liegt die Aufgabe zugrunde, diese Nachstellung mit einfachen Mitteln zu automatisieren.

Zwei erfindungsgemäße Lösungen dieser Aufgabe sind in den nebengeordneten Ansprüchen 1 und 6 gekennzeichnet. Danach ist im wesentlichen auf wenigstens einer Lamelle innerhalb einer Fassadenebene ein Signalgeber mit einem Lichtteiler und zwei Lichtsensoren so angeordnet, daß sich die elektrischen Kenngrößen der Lichtsensoren bei einer Drehung der Lamelle um ihre Längsachse gegensinnig ändern. Zur Nachstellung der Lamelle dient ein Stellmotor, der über eine Verstärkereinrichtung abhängig von der Differenz der Kenngrößen der beiden Lichtsensoren gesteuert wird.

Bei der in Anspruch 1 gekennzeichneten Ausführungsform der Erfindung wirkt eine Abschatteinrichtung als winkelabhängiger "Lichtteiler".

Gemäß der in Anspruch 6 gekennzeichneten Ausführungsform des erfindungsgemäßen Grundgedankens kann aber auch ein aktiver Lichtteiler verwendet werden, der unterschiedliche Lichtanteile auf die beiden Lichtsensoren lenkt, und zwar abhängig vom Neigungswinkel der Lichtstrahlen gegenüber der Oberseite.

Als Lichtsensoren können dabei Fotozellen, lichtempfindliche Widerstände, Fototransistoren oder dergleichen dienen. Vorzugsweise bilden die Sensoren zusammen mit weiteren Widerständen eine Brückenschaltung, an deren Ausgang der Eingang der Verstärkereinrichtung angeschlossen ist. Diese Brückenschaltung wie auch die Verstärkereinrichtung und der Stellmotor können dabei durch zusätzliche Fotozellen auf der Lamelle gespeist werden.

Es liegt im Rahmen der Erfindung, alle Lamellen, die sich in derselben Fassadenebene eines Gebäudes befinden und deren Längsachsen parallel zueinander verlaufen mit Hilfe von Servomotoren abhängig von einem einzigen Signalgeber auf einer dieser Lamellen anzusteuern: Da diese Lamellen alle der gleichen Sonneneinstrahlung ausgesetzt sind, gilt auch für sie alle die gleiche optimale Einstellposition. Hierbei kann für alle in derselben Fensteröffnung angeordneten Lamellen ein einziger Servomotor vorgesehen sein, der, z. B. über ein Kettengetriebe, an alle Lamellen angekuppelt ist.

Mit Hilfe der Erfindung ist es offensichtlich einfach möglich, die Einstellung solcher Lamellen in unterschiedlich orientierten Fassadenebenen eines Gebäudes getrennt voneinander optimal der Sonnenbahn nachzusteuern. Dabei ist es vorteilhaft, zwischen die die Servomotoren aller Lamellen in einer Fassadenebene steuernden Verstärkereinrichtung und dem dieser Fassadenebene zugeordneten Signalgeber eine Umschalteinrichtung anzuordnen. Damit wird es möglich, den Regelkreis zu unterbrechen und durch Vorgabe einer willkürlich änderbaren Steuerspannung alle Lamellen dieser Fassadenebene auf einen bestimmten Neigungswinkel einzustellen. Man kann dann die Sonnenschutzeinrichtung auch so einstellen, daß die Sonnenstrahlung voll in den hinter der Fensteröffnung liegenden Raum eintritt und so - beispielsweise im Winterhalbjahr - auch zur Gebäudeheizung genutzt werden kann.

Die Abschatteinrichtung hat vorzugsweise eine Trennwand, die sich zwischen ihrer Dachwand und der Oberseite der Lamelle erstreckt und die zwischen den beiden Lichtsensoren hindurch verläuft: Dadurch erhöht sich die Empfindlichkeit des Signalgebers, also die Größe der gegensinnigen Änderung der elektrischen Kenngrößen bezogen auf eine bestimmte Änderung des Neigungswinkels der Lamelle. Sehr günstige 'Verhältnisse werden dabei erzielt, wenn die Trennwand rechtwinklig auf der Oberseite der Lamelle und auf der Dachwand steht und ferner die Abschatteinrichtung symmetrisch zu der Trennwand ausgebildet ist.

Die höchste Empfindlichkeit läßt sich erreichen, wenn man die Trennwand parallel zur Längsachse der Lamelle anordnet und die Mittelpunkte der Lichtsensoren mit gleichem Abstand von der Trennwand auf einer Querlinie liegen, die rechtwinklig auf der Längsachse steht. Hierbei kann die Dachwand eben und mit konstantem Abstand parallel zur Oberseite der Lamelle verlaufen. Eine solche Anordnung bringt jedoch eine optimale Empfindlichkeit nur dann, wenn die Längsachsen der Lamellen in Nordsüdrichtung verlaufen, also rechtwinklig auf der Ebene der Sonnenbahn stehen.

Um unabhängig von der jeweiligen Ausrichtung einer Fassadenebene zur Sonnenbahn stets die höchste Empfindlichkeit zu erreichen, ist gemäß einer Weiterbildung der Erfindung vorgesehen, der Dachwand einen bogenförmigen Verlauf zu geben und die Querkanten der Dachwand bis auf die Oberseite der Lamelle herunterzuziehen. Eine derartige Ausführungsform der Erfindung wird anhand der Figuren näher erläutert; es zeigen

FIG 1 eine schematische, perspektivische Ansicht einer Fensteröffnung F mit darin angeordneten Lamellen,

FIG 2 einen Querschnitt entlang Linie II - II durch eine Lamelle in FIG 1,

FIG 3 das Reflexionsdiagramm einer Lamelle nach FIG 1,

FIG 4 ein Sonnenstandsdiagramm,

FIG 5 bis 8 ein erstes Ausführungsbeispiel der Erfindung, und zwar

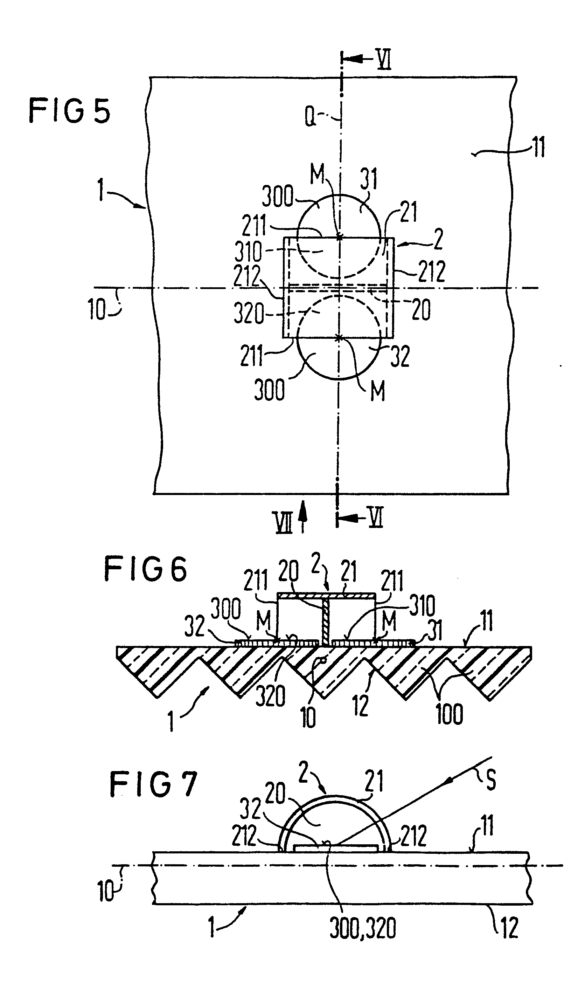

FIG 5 eine Draufsicht auf einen Abschnitt einer Lamelle mit einem Signalgeber,

FIG 6 einen Querschnitt entlang Linie VI - VI in FIG 5,

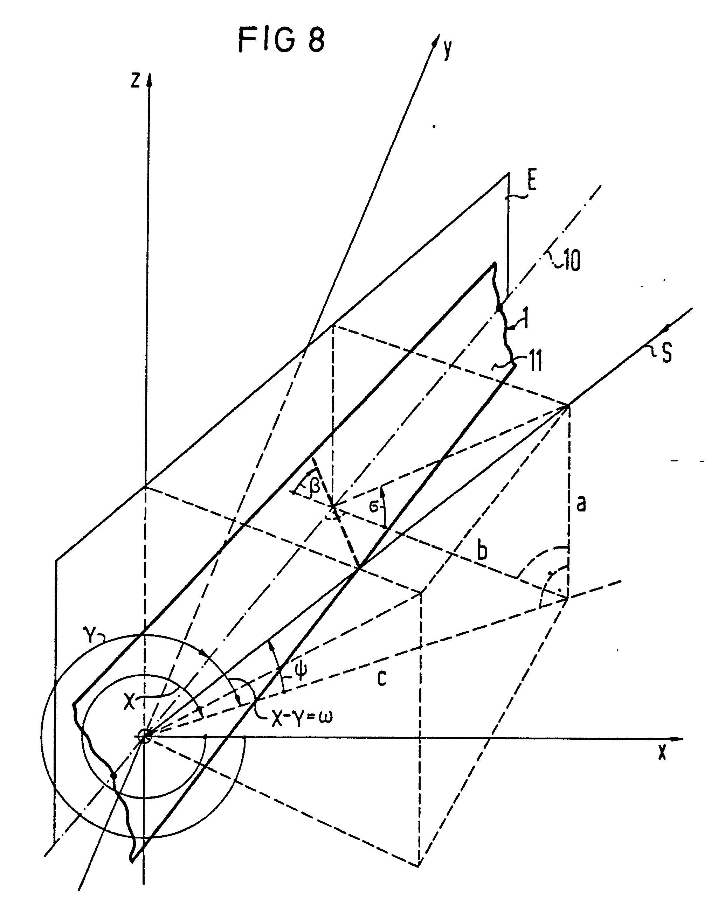

FIG 7 eine Seitenansicht des Signalgebers in FIG 5 in Richtung des Pfeiles VII und

FIG 8 ein Koordinatensystem mit Bestimmungsgrößen für den Neigungswinkel einer Lamelle in einer beliebig orientierten Fassadenebene,

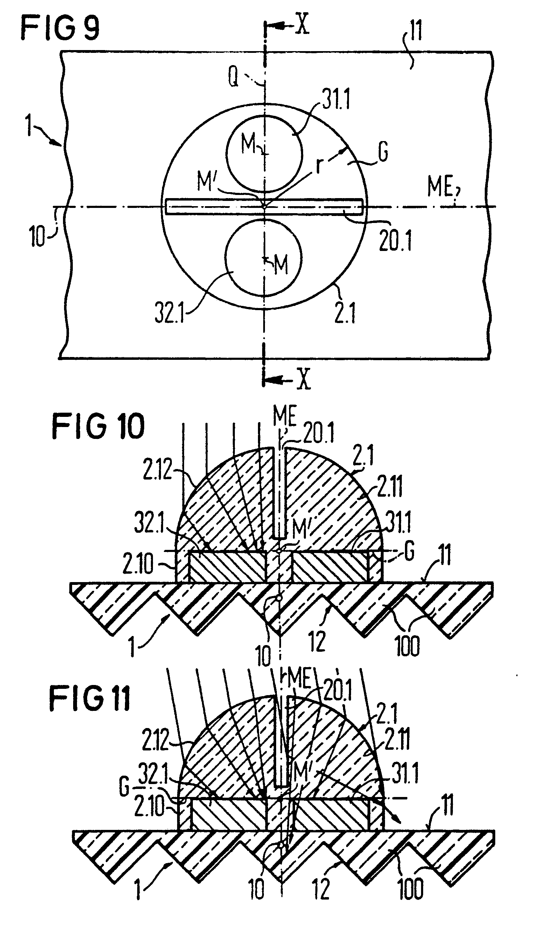

FIG 9 bis 11 ein zweites Ausführungsbeispiel, und zwar

FIG 9 eine Draufsicht auf eine Lamelle ähnlich FIG 5,

FIG 10 einen Querschnitt vergleichbar dem in FIG 6 und

FIG 11 einen Querschnitt entsprechend FIG 10 mit abweichender Neigung der einfallenden Lichtstrahlen.

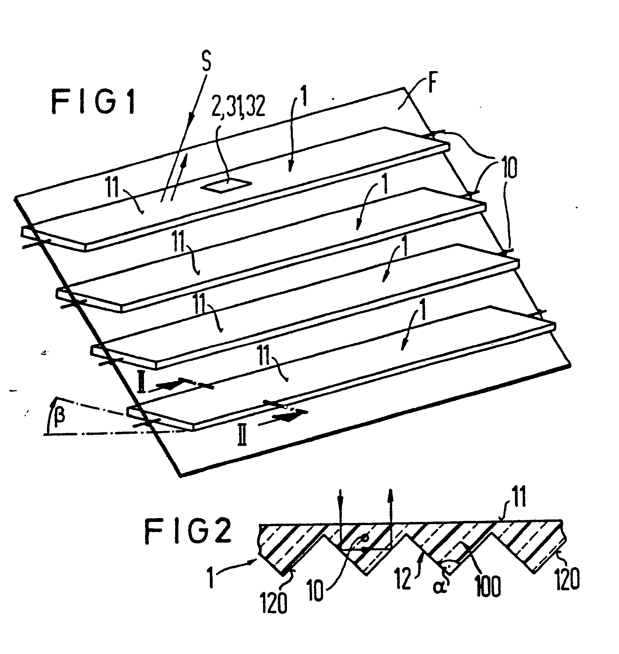

Die in den FIG 1 und 2 dargestellte, an sich bekannte Sonnenschutzeinrichtung besteht aus mehreren Lamellen 1, die um eine Längsachse 10 drehbar in einer Fensteröffnung F angeordnet sind. Jede Lamelle besteht aus brechendem Material, beispielsweise Kunststoff, und hat den in FIG 2 dargestellten Querschnitt: Sie hat eine ebene Oberseite II, die den Sonnenstrahlen S - FIG 1 - zugewandt ist. Auf der Unterseite sind lückenlos nebeneinander Prismen 100 angeordnet, die parallel zur Längsachse 10 verlaufen und von Katheten 120 und der Oberseite 11 - als Hypotenuse - begrenzt sind. Die einzelnen Prismen haben quer zur Längsachse 10 den Querschnitt eines gleichschenkligen Dreieckes, wobei der Innenwinkel α zwischen den Katheten so gewählt ist, daß auf die Oberseite 11 auftreffende Sonnenstrahlen - unter noch zu beschreibenden Bedingungen - wieder nach außen reflektiert werden, also nicht in den Raum hinter der Fensteröffnung F eintreten können. Eine der Bedingungen für diese auf der Totalreflexion beruhenden "Retroreflexion" ist, daß der Innenwinkel α gleich ist 90° ± 3° je nach Material.

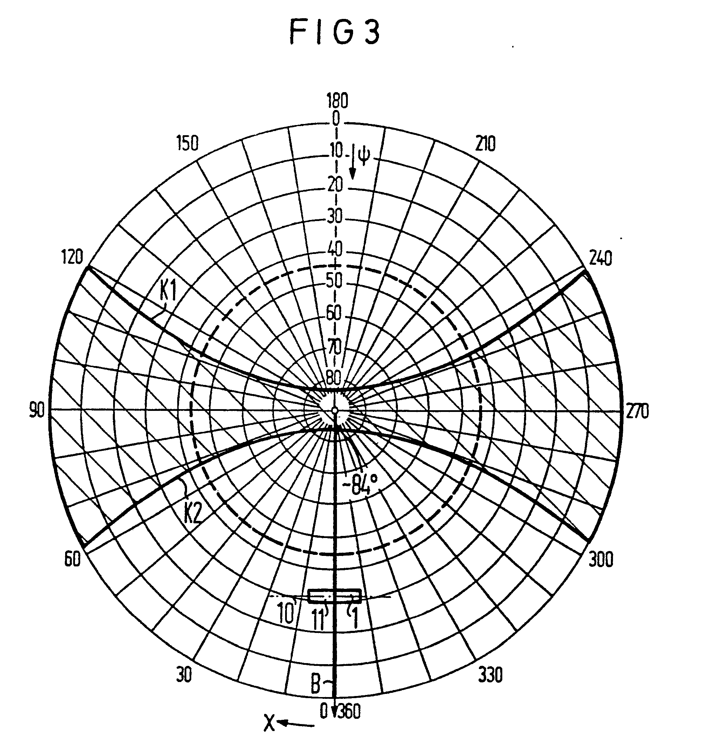

In FIG 3 ist das Reflexionsdiagramm einer Lamelle gemäß FIG 1 und 2 bei einem Innenwinkel α von 90° dargestellt:

Radial sind die Winkel von "Azimutebenen" eingetragen, die senkrecht auf der Oberseite 11 der Lamelle stehen und deren Azimutwinkel χ von der Bezugsgeraden B aus gezählt werden, die rechtwinklig zur Längsachse 10 der Lamelle verläuft.

In konzentrischen Kreisen sind die Höhenwinkel ψ von 0 bis 90° aufgetragen. In dem Reflexionsdiagramm ist der Sperrbereich der Lamelle schraffiert eingetragen und durch Grenzkurven K1 und K2 begrenzt. Zu jedem in dem Sperrbereich liegenden Punkt gehört also ein Azimutwinkel χ und ein Höhenwinkel ψ. Alle auf die Oberseite 11 einer Lamelle auftreffenden Strahlen, deren Parameter χ und ψ innerhalb des Sperrbereiches liegen, werden total reflektiert. Alle Lichtstrahlen, die mit Parameterkombinationen auf die Oberseite auftreffen, die außerhalb des Sperrbereiches liegen, werden in den Innenraum hindurchgelassen. Die Breite des Sperrbereiches nimmt mit zunehmender Abweichung des Innenwinkels α von 90° ab.

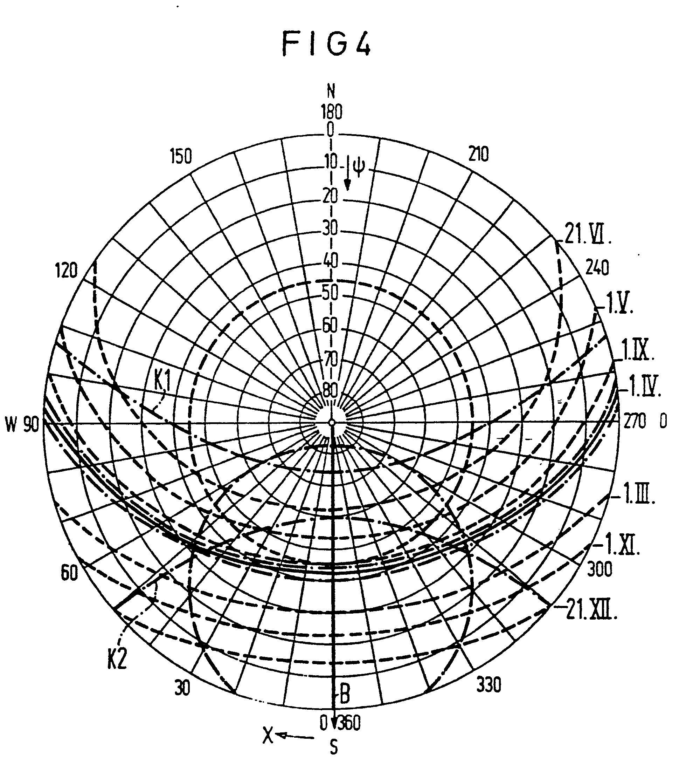

FIG 4 zeigt in derselben Darstellung wie FIG 3 ein Sonnenstandsdiagramm: Darin sind die Bahnkurven der Sonne für verschiedene Tage des Jahres eingetragen. Jede Bahnkurve gibt zu jedem Azimutwinkel χ den zugehörigen Höhenwinkel ψ.

Ferner ist in FIG 4 der Sperrbereich einer Lamelle in einer genau nach Süden orientierten vertikalen Fassadenebene strichpunktiert so eingetragen, daß ein möglichst großer Abschnitt der Bahnkurve vom 21.6. in den Sperrbereich fällt. Hierzu wurde die Lamelle so gedreht, daß ihre Bezugsgerade B genau in die Südrichtung weist; außerdem war eine Parallelverschiebung in Südrichtung erforderlich, die durch eine Drehung der Lamelle um ihre Längsachse um den Neigungswinkel β aus der Horizontalebene erreicht wird, wobei sich auch die Form der Grenzkurven K1, K2 des Sperrbereiches etwas ändert.

Aus FIG 4 ist ersichtlich, daß bei der Sonnenschutzeinrichtung nach FIG 1 während des Tages praktisch keine Nachführung erforderlich ist, da die Bahnkurve nur in den frühen Morgenstunden und in den späten Abendstunden außerhalb des Sperrbereiches liegt. Jedoch ist während des Jahres eine Parallelverschiebung des Sperrbereiches, also eine Änderung des Neigungswinkels β der Lamellen erforderlich.

Um diese Nachführung durch Änderung des Neigungswinkels β zu automatisieren, sind die Lamellen 1 in FIG 1 durch einen nicht dargestellten Servomotor - oder mehrere, jeder Lamelle zugeordnete Servomotoren - nachstellbar. Der Servomotor bzw. die Servomotoren werden dabei von einem ebenfalls nicht gezeigten Verstärker gesteuert, der eingangsseitig ein Differenzsignal von einem Signalgeber (2, 31, 32) auf der Oberseite 11 einer der Lamellen 1 erhält.

Der Aufbau dieses Signalgebers ist in den FIG 5 bis 7 im Detail dargestellt: Er ist symmetrisch zu einer Ebene ausgebildet, die auf der Oberseite 11 der Lamelle 1 senkrecht steht und parallel zu deren Längsachse, vorzugsweise durch diese, geht. Der Signalgeber besteht im wesentlichen aus einer Abschatteinrichtung 2 mit einer von Längskanten 211 und Querkanten 212 begrenzten Dachwand 21 und einer auf dieser Dachwand senkrecht stehenden Trennwand 20, die die Abschatteinrichtung 2 in zwei gleiche Hälften teilt. Die Dachwand 21 ist bogenförmig, vorzugsweise halbkreisförmig, ausgebildet, so daß ihre Querkanten 212 auf der Oberseite 11 der Lamelle 1 aufliegen - FIG 7.

Die Dachwand 21 ist in FIG 5 rechtwinklig auf die Oberseite 11 projiziert dargestellt. Die Längs- und Querkanten 211 bzw. 212 begrenzen damit zugleich einen rechteckigen Abschattbereich der Abschatteinrichtung auf der Oberseite 11.

Zu beiden Seiten der Trennwand 20 sind nun zwei Lichtsensoren 31, 32, z. B. in Form von lichtempfindlichen Widerständen mit kreisrunden Sensorflächen 300, so angeordnet, daß die Mittelpunkte M der Sensorflächen mit gleichem Abstand von der Trennwand 20 auf einer Querlinie Q liegen, die rechtwinklig zu der Längsachse 10 verläuft. Die Abstände dieser Mittelpunkte M sind dabei so gewählt, daß gleich große Teilflächen 310, 320 der beiden Lichtsensoren in dem Abschattbereich der Abschatteinrichtung 2 liegen.

Geht man davon aus, daß auf die Oberseite 11 auftreffende Sonnenstrahlen 5 stets in einer Bezugsebene liegen, die rechtwinklig auf der Oberseite 11 steht und die parallel zu der Längsachse 10 verläuft, dann erhalten die nicht abgeschatteten Teilflächen beider Lichtsensoren praktisch gleich viel Energie und werden daher gleiche elektrische Kenngrößen haben, also entweder gleichen Widerstand aufweisen oder dieselbe Fotospannung liefern. Wandern dagegen die Sonnenstrahlen aus dieser Bezugsebene heraus, dann erhält einer der Sensoren mehr Licht als der andere, so daß sich ihre elektrischen Kenngrößen gegenläufig ändern, wobei das Vorzeichen der Änderung von der Richtung abhängig ist, in der die Sonne aus der Bezugsebene auswandert. Diese Information wird nun durch Differenzbildung - bei Fotowiderständen mit Hilfe einer Brückenschaltung - zur Bildung einer Steuergröße ausgewertet, die der Verstärkereinrichtung zur Steuerung des Servomotors zugeführt wird. Dieser ändert dann den Neigungswinkel β der Lamelle so lange, bis die beiden Lichtsensoren wieder dieselben elektrischen Kenngrößen haben und die Verstärkereinrichtung damit keine resultierende Steuergröße mehr erhält.

Die Erfindung beruht dabei auf der Tatsache, daß sich der Neigungswinkel β einer Lamelle bei einer beliebig orientierten Fassadenebene immer so einstellen läßt, daß die Sonnenstrahlen in der Bezugsebene liegen. Hierzu wird auf FIG 8 verwiesen, in der in ein mit der x-Achse nach Süden orientiertes Koordinatensystem x, y, z eine Fassadenebene E mit einem von der Südrichtung gemessenen Azimutwinkel γ eingetragen ist. Ferner ist eine Lamelle 1 mit ihrer Längsachse 10 in der Fassadenebene E sowie deren Neigungswinkel β gegen die Horizontalebene sowie ein Sonnenstrahl S mit einem Azimutwinkel χ und einem Höhenwinkel ψ eingezeichnet. Damit nun der Sonnenstrahl S in der Bezugsebene liegt, die durch die Längsachse 10 geht und auf der Oberseite 11 der Lamelle 1 rechtwinklig steht, muß der Neigungswinkel β aus der Beziehung ermittelt werden

$$tg\,(\beta + 90°) = \frac{tg\,\psi}{\sin(\chi - \psi)}$$

wobei χ und ψ Azimut- bzw. Höhenwinkel des Sonnenstrahles S und γ der Azimutwinkel der Fassadenebene E ist.

Bei dem Ausführungsbeispiel nach FIG 9 bis 11 dient als Lichtteiler eine Umlenkeinrichtung in Form einer Halbkugel 2.1 aus lichtbrechendem Material, insbesondere aus "Kunststoffglas". Diese Halbkugel hat eine kreisförmige Grundfläche G mit dem Radius r um den Kugelmittelpunkt M' Rechtwinklig zu dieser Grundfläche G verläuft eine Mittelebene ME durch den Kugelmittelpunkt M'. Zu beiden Seiten der Mittelebene ME und parallel zu ihr verläuft ein Sperrschlitz 20.1, der sich über mindestens 50 % des Radius r von der Außenfläche in Richtung auf den Kugelmittelpunkt M' hin erstreckt. Dieser Trennspalt kann zusätzlich mit einem lichtundurchlässigen Material ausgefüllt sein.

Die Halbkugel 2.1 ist auf der Oberseite 11 der Lamelle 1 so angebracht, daß die Grundfläche G parallel zu der Oberseite 11 und die Mittelebene NE rechtwinklig zu der Oberseite 11 und durch die Längsachse 10 verläuft.

Äquidistant zu der Mittelebene ME sind als Lichtsensoren zwei Fotodioden 31.1 und 32.1 so angeordnet, daß ihre Mittelpunkte auf einer Querlinie Q liegen, die rechtwinklig zu der Längsachse 10 und durch den Kugelmittelpunkt M' verläuft. Die lichtempfindlichen Flächen der Fotodioden liegen an der Grundfläche G der Halbkugel 2.1 an. Die Fotodioden sind insbesondere in entsprechenden Aussparungen in einem Zylinderabschnitt 2.10 angeordnet, der sich an die Grundfläche G der Halbkugel anschließt.

Wegen der Symmetrie der Anordnung zu der Mittelebene ME und zu der Querlinie Q (FIG 9) erhalten die beiden Fotodioden gleiche Lichtanteile, solange die Lichtstrahlen parallel zur Mittelebene verlaufen (FIG 10). Die beiden Fotodioden liefern daher praktisch identische Signale.

Diese Symmetrie wird jedoch gestört, sobald die Lichtstrahlen einen kleinen Winkel mit der Mittelebene ME einschließen, wie dies FIG 11 zeigt. Die Fotodioden erhalten hier unterschiedliche Lichtanteile und liefern dementsprechend unterschiedliche Ausgangssignale, die zur Nachstellung der Lamelle 1 in derselben Weise ausgenutzt werden, wie dies anhand des Ausführungsbeispieles nach den FIG 5 bis 7 erläutert wurde.

**Patentansprüche**

1. Sonnenschutzeinrichtung für eine Fensteröffnung (F) in einer Fassadenebene (E), bestehend aus mindestens einer um eine Längsachse (10) drehbar in der Fensteröffnung (F) angeordneten Lamelle (1) aus lichtbrechendem Material, die auf der Oberseite (11) eben ist und auf der Unterseite (12) lückenlos nebeneinander und parallel zu der Längsachse (10) verlaufende Prismen (100) aufweist, die in einer zur Längsachse (10) rechtwinkligen Querschnittsebene die Form eines gleichschenkligen Dreieckes haben, wobei die Hypotenuse von der ebenen Oberseite (11) gebildet wird und die Katheten (120) einen Innenwinkel ($\alpha$) einschließen, bei dem die Bedingung der Retroreflexion erfüllt ist, dadurch gekennzeichnet,

daß zumindest eine Lamelle (1) in einer Fensteröffnung (F) der Fassadenebene (E) auf ihrer Oberseite (11) einen Signalgeber mit einer Abschatteinrichtung (2) für zwei Lichtsensoren (31, 32) trägt, deren elektrische Kenngröße von der Größe der bestrahlten Sensorfläche (300) und der Intensität der Strahlung abhängt,

daß die Abschatteinrichtung (2) im Abstand von der Oberseite (11) der Lamelle (1) eine Dachwand (21) hat, durch die bei rechtwinkliger Projektion auf die Oberseite (11) auf dieser ein Abschattbereich definiert ist,

daß die beiden Lichtsensoren (31, 32) einander benachbart so auf der Oberseite (11) angeordnet sind, daß ihre Mittelpunkte (M) auf unterschiedlichen Parallelen zu der Längsachse (10) und einander zugewandte Teilflächen (310, 320) der Sensorflächen (300) der beiden Lichtsensoren (31, 32) in dem Abschattbereich liegen,

und daß die Lamelle (1) an einen Stellmotor gekuppelt und dieser an den Ausgang einer Verstärkereinrichtung angeschlossen ist, die eingangsseitig abhängig von der Differenz der Kenngrößen der beiden Lichtsensoren (31, 32) gesteuert ist.

2. Sonnenschutzeinrichtung nach Anspruch 1, dadurch gekennzeichnet, daß die Abschatteinrichtung (2) eine Trennwand (20) hat, die sich zwischen der Oberseite (11) der Lamelle (1) und der Dachwand (21) erstreckt und zwischen den beiden Lichtsensoren (31, 32) verläuft.

3. Sonnenschutzeinrichtung nach Anspruch 2, dadurch gekennzeichnet, daß die Trennwand (20) senkrecht auf der Oberseite (11) der Lamelle (1) und auf der Dachwand (21) steht und daß die Abschatteinrichtung (2) symmetrisch zu der Trennwand (20) ausgebildet ist.

4. Sonnenschutzeinrichtung nach Anspruch 3, dadurch gekennzeichnet, daß die Trennwand (20) parallel zur Längsachse (10) der Lamelle (1) verläuft und die Mittelpunkte (M) der Lichtsensoren (31, 32) mit gleichem Abstand von der Trennwand (20) auf einer Querlinie (Q) liegen, die rechtwinklig auf der Längsachse (10) steht.

5. Sonnenschutzeinrichtung nach Anspruch 4, dadurch gekennzeichnet, daß sich die Dachwand (21) bogenförmig zwischen zwei Querkanten (212) erstreckt, mit denen die Abschatteinrichtung (2) auf der Oberseite (11) der Lamelle (1) aufliegt.

6. Sonnenschutzeinrichtung für eine Fensteröffnung (F) in einer Fassadenebene (E), bestehend aus mindestens einer um eine Längsachse (10) drehbar in der Fensteröffnung (F) angeordneten Lamelle (1) aus lichtbrechendem Material, die auf der Oberseite (11) eben ist und auf der Unterseite (12) lückenlos nebeneinander und parallel zu der Längsachse (10) verlaufende Prismen (100) aufweist, die in einer zur Längsachse (10) rechtwinkligen Querschnittsebene die Form eines gleichschenkligen Dreieckes haben, wobei die Hypotenuse von der ebenen Oberseite (11) gebildet wird und die Katheten (120) einen Innenwinkel ($\alpha$) einschließen, bei dem die Bedingung der Retroreflexion erfüllt ist, dadurch gekennzeichnet,

daß zumindest eine Lamelle (1) in einer Fensteröffnung (F) der Fassadenebene (E) auf ihrer Oberseite (11) einen Signalgeber mit zwei Lichtsensoren (31.1, 32.1), deren elektrische Kenngröße vom auftreffenden Lichtanteil abhängt, und einen diesen zugeordneten Lichtteiler trägt,

daß als Lichtteiler eine Halbkugel (2.1) aus einem lichtbrechenden Material dient, die symmetrisch zu einer Mittelebene (ME) ausgebildet ist,

daß der Lichtteiler auf der Oberseite (11) der Lamelle (1) so angeordnet ist, daß seine Mittelebene (ME) rechtwinklig auf der Oberseite (11) steht und durch die Längsachse (10) verläuft, und

daß die beiden Lichtsensoren (31.1, 32.1) einander benachbart auf der Oberseite (11) so angeordnet sind, daß ihre Mittelpunkte (M) äquidistant von der Mittelebene (ME) auf einer Querlinie (Q) liegen, die durch den Mittelpunkt (M') der Halbkugel (2.1) und rechtwinklig zu der Längsachse (10) verläuft,

und daß die Lamelle (1) an einen Stellmotor gekuppelt und dieser an den Ausgang einer Verstärkereinrichtung angeschlossen ist, die eingangsseitig abhängig von der Differenz der Kenngrößen der beiden Lichtsensoren (31.1, 32.1) gesteuert ist.

7. Sonnenschutzeinrichtung nach Anspruch 6, dadurch gekennzeichnet, daß die Halbkugel einen Sperrschlitz (20.1) aufweist, der sich parallel zu und zu beiden Seiten der Mittelebene (ME) über mindestens 50 % des Kugelradius erstreckt.

## Claims

1. Sunshade device for a window opening (F) in a plane of a facade (E), consisting of at least one slat (1) of light-refracting material arranged rotatably about a longitudinal axis (10) in the window opening (F), which is flat on the upper side (11), and has on the under side (12) prisms (100) extending next to one another without a gap and parallel to the longitudinal axis (10), which in a cross-section orthogonal to the longitudinal axis (10) have the form of an isosceles triangle, the basis being formed by the flat upper side (11), and the two shorter sides (120) enclosing an interior angle (5), for which the condition of retro-reflect ion is fulfilled, characterized in that at least one slat (1) in a window opening (F) of the plane of the facade (E) carries on its upper side (11) a transducer with a shading device (2) for two light sensors (31, 32), the electrical characteristics of which depend on the magnitude of the irradiated sensor areas (300) and the intensity of the radiation, in that at a distance from the upper side (11) of the slat (1) the shading device (2) has a top wall (21), through which, given orthogonal projection onto the upper side (11), a shading region is defined on the latter, in that the two tight sensors (31, 32) are arranged next to one another on the upper side (11) in such a way that their mid-points (M) lie on different parallels to the longitudinal axis (10), and mutually facing sub-areas (310, 320) of the sensor areas (300) of the two light sensors (31, 32) lie in the shading region and in that the slat (1) is coupled to a positioning motor and the latter is connected to the output of an amplifying device, which is controlled on the input side as a function of the difference between the characteristics of the two light sensors (31, 32).

2. Sunshade device according to Claim 1, characterized in that the shading device (2) has a partition (20), which stretches between the upper side (11) of the slat (1) and the top wall (21), and extends between the two light sensors (31, 32).

3. Sunshade device according to Claim 2, characterized in that the partition (20) is perpendicular to the upper side (11) of the slat (1) and to the top wall (21), and in that the shading device (2) is constructed symmetrically to the partition (20).

4. Sunshade device according to Claim 3, characterized in that the partition (20) extends parallel to the longitudinal axis (10) of the slat (1), and the mid-points (M) of the tight sensors (31, 32) lie at the same distance from the partition (20) on a transverse line (Q), which is orthogonat to the longitudinal axis (10).

5. Sunshade device according to Claim 4, characterized in that the top wall (21) stretches like an arc between two transverse edges (212), with which the shading device (2) ties on the upper side (11) of the slat (1).

6. Sunshade device for a window opening (F) in a plane of a facade (E), consisting of at least one stat (1) of light-refracting material arranged rotatably about a longitudinal axis (10) in the window opening (F), which is flat on the upper side (11), and has on the under side (12) prisms (100) extending next to one another without a gap and parallel to the longitudinal axis (10), which in a cross-section orthogonally to the longitudinal axis (10) have the form of an isosceles triangle, the basis being formed by the flat upper side (11), and the two shorter sides (120) enclosing an anterior angle (α), for which the condition of retro-reflect ion is fulfilled, characterized in that at least one slat (1) in a window opening (F) of the plane of the facade (E) carries on its upper side (11) a transducer with two light sensors (31.1, 32.1), the electrical characteristics of which depend on the proportion of incident light, and a light splitter assigned to these light sensors, in that a hemisphere (2.1) of a light-refracting material serves as light splitter, being constructed symmetrical to a central plane (ME), in that the tight splitter is arranged on the upper side (11) of the slat (1) in such a way that its central plane (ME) is orthogonal to the upper side (11), and extends through the longitudinal axis (10), and in that the two light sensors (31.1, 32.1) are arranged next to one another on the upper side (11) in such a way that their mid-points (M) lie on a transverse line (Q) equidistant from the central plane (ME), which extends through the mid-point (M') of the hemisphere (2.1) and orthogonal to the longitudinal axis (10), and in that the slat (1) is connected to a positioning motor and the latter is connected to the output of an amplifying device, which is controlled on the input side as a function of the difference between the characteristics of the two light sensors (31.1, 32.1).

7. Sunshade device according to Claim 6, characterized in that the hemisphere has a blocking slot (20.1) which extends parallel to and on both sides of the central plane (ME) over at least 50 % of the sphere radius.

**Revendications**

1. Dispositif pare-soleil pour une baie de fenêtre (F) ménagée dans le plan d'une façade (E), constitué par au moins une lamelle (1) disposée à rotation autour d'un axe longitudinal (10) dans la baie de fenêtre (F) et faite avec un matériau réfringent, ladite lamelle étant plane sur son côté supérieur (11) et comportant sur son côté inférieur (12) des prismes (100) qui s'étendent jointivement côte à côte et parallèlement à l'axe longitudinal (10), et possédant dans un plan de coupe transversal, perpendiculaire à l'axe longitudinal (10), la forme d'un triangle isocèle, l'hypoténuse étant formée par le côté supérieur plan (11), alors que les côtés latéraux (120) font entre eux un angle (α) pour lequel la condition de rétroflexion est satisfaite, caractérisé par le fait qu'au moins une lamelle (1) disposée dans une baie de fenêtre (F) du plan de la façade (E), porte sur son côté supérieur (11) un générateur de signaux avec un dispositif de masquage (2) pour deux capteurs de lumière (31, 32) dont les grandeurs électriques caractéristiques dépendent de la grandeur de la surface des capteurs irradiée (300) et de l'intensité du rayonnement, que le dispositif de masquage (2) possède, à distance du côté supérieur (11) de la lamelle, une paroi de couverture (21) qui définit, dans le cas d'une projection orthogonale sur le côté supérieur (11), une zone masquée sur ce dernier,

que les deux capteurs de lumière (31, 32) sont disposés dans le voisinage l'un de l'autre sur le côté supérieur (11), de manière que leurs centres (M) se situent sur des parallèles différentes à l'axe longitudinal et que des surfaces partielles (310, 320), si tuées l'une en face de l'autre, des surfaces des capteurs (300) appartenant aux deux capteurs de lumière (31, 32), se trouvent dans la zone masquée, et

que la lamelle (1) est accouplée à un servomoteur et que celui-ci est branché à la sortie d'un dispositif amplificateur qui est commandé, du côté entrée, en fonction de la différence entre les grandeurs caractéristiques des deux capteurs de lumière (31, 32).

2. Dispositif pare-soleil selon la revendication 1, caractérisé par le fait que le dispositif de masquage (2) possède une paroi de séparation (20) qui s'étend entre le côté supérieur (11) de la lamelle (1) et la paroi de couverture (21), et passe entre les deux capteurs de lumière (31, 32).

3. Dispositif pare-soleil selon la revendication 2, caractérisé par le fait que la paroi de séparation (20) est perpendiculaire au côté supérieur (11) de la lamelle et à la paroi de couverture (21), et que le dispositif de masquage (2) est réalisé de façon à présenter une symétrie par rapport à la paroi de séparation (20).

4. Dispositif pare-soleil selon la revendication 3, caractérisé par le fait que la paroi de séparation (20) s'étend parallèlement à l'axe longitudinal (10) de la lamelle (1), et que les sens (M) des capteurs de lumière (31, 32) se situent, à même distance de la paroi de séparation, sur une ligne transversale (Q) qui est perpendiculaire à l'axe longitudinal.

5. Dispositif pare-soleil selon la revendication 4, caractérisé par le fait que la paroi de couverture (21) s'étend de façon centrée entre deux arêtes transversales (212) avec lesquelles le dispositif de masquage (2) repose sur le côté supérieur (11) de la lamelle (1).

6. Dispositif pare-soleil pour une baie de fenêtre (F) ménagée dans le plan d'une façade (E), constitué par au moins une lamelle (1) disposée à rotation autour d'un axe longitudinal (10) dans la baie de fenêtre (F) et faite avec un matériau réfringent, ladite lamelle étant plane sur son côté supérieur (11) et comportant sur son côté inférieur (12) des prismes (100) qui s'étendent jointivement côte à côte et parallèlement à l'axe longitudinal (10), et possédant dans un plan de coupe transversal, perpendiculaire à l'axe longitudinal (10), la forme d'un triangle isocèle, l'hypoténuse étant formée par la côté supérieur plan (11), alors que les côtés latéraux (120) font entre eux un angle ($\alpha$) pour lequel la condition de rétroflexion est satisfaite, caractérisé par le fait,

qu'au moins une lamelle (1) se trouvant dans une baie de fenêtre (5) du plan de la façade (E), porte sur son côté supérieur (11) un générateur de signaux avec deux capteurs de lumière (31.1, 32.1), dont les grandeurs électriques caractéristiques dépendent des parties de lumière incidentes, ainsi qu'un diviseur de lumière qui est associé à ceux-ci,

que l'on utilise, comme diviseur de lumière, une demi-sphère (2.1) en un matériau réfringent, ladite demi-sphère étant réalisée symétriquement par rapport à un plan médian (ME),

que le diviseur de lumière est disposé sur le côté supérieur (11) de la lamelle (1) de telle façon que son plan médian (ME) est perpendiculaire sur le côté supérieur (11) et passe par l'axe longitudinal (10), et

que les deux capteurs de lumière (31.1, 32.1) sont disposés dans le voisinage l'un de l'autre sur le côté supérieur (11), de manière que leurs centres (M) se situent à égale distance du plan médian (ME) sur une ligne transversale (Q) qui passe par le centre (M') de la demi-sphère (2.1) et à angle droit par rapport à l'axe longitudinal (10), et

que la lamelle (1) est accouplée à un servomoteur et que celui-ci est branché à la sortie d'un dispositif amplificateur qui est commandé en fonction de la différence des grandeurs caractéristiques des deux capteurs de lumière (31.1, 32.1).

7. Dispositif pare-soleil selon la revendication 6, caractérisé en ce que la demi-sphère comporte une fente d'occultation (20.1) qui s'étend parallèlement au plan médian (ME) et de part et d'autre de celui-ci sur au moins 50 % du rayon de la sphère.

EP 0 199 931 B1

FIG 1

FIG 2

# F I G 3

# F I G 4

FIG 5

FIG 6

FIG 7

FIG 8

**FIG 9**

**FIG 10**

**FIG 11**